# EUROPEAN PATENT SPECIFICATION

(11) **EP 0 335 273 B1**
(45) Date of publication and mention of the grant of the patent: **28.06.1995**
(21) Application number: 89105296.1
(22) Date of filing: 23.03.1989
(51) Int. Cl.: H04N 5/92

(54) **System for recording and reproducing digital audio signals**
System zum Aufzeichnen und Wiedergeben von digitalen Audiosignalen
Système d'enregistrement et de reproduction de signaux audio numériques

(30) Priority: 29.03.1988 JP 77546/88
(43) Date of publication of application: 04.10.1989
(73) Proprietor: SONY CORPORATION, Tokyo 141 (JP)
(72) Inventor: Chiba, Nobuhiro, Shinagawa-ku Tokyo (JP)
(74) Representative: TER MEER STEINMEISTER & PARTNER GbR

(56) References cited:
- EP-A- 0 239 326
- GB-A- 2 120 423
- US-A- 4 486 780
- US-A- 4 660 103
- SMPTE JOURNAL. vol. 97, no. 3, March 1988, US pages 182-193; R. BRUSH: "Design Considerations for the D-2 NTSC Composite DVTR"
- SMPTE JOURNAL. vol. 96, no. 10, October 1987,US pages 934 - 943; E.ENGBERG ET AL.: 'The Composite Digital Format and Its Applications'
- PATENT ABSTRACTS OF JAPAN vol. 11, no. 197 (P-589)25 June 1987 & JP-A-62 020 177
- PATENT ABSTRACTS OF JAPAN vol. 11, no. 164 (P-580)27 May 1987 & JP-A-61 296 572

## Description

### Field of the Invention

The present invention relates to a system for recording and reproducing a digital audio signal, which is suitable for use, for example, in a digital video tape recorder (D-VTR) for reproducing a digital video signal and a digital audio signal magnetically recorded on a magnetic tape.

### Description of the Prior Art

A digital video tape recorder (D-VTR) of the described type, in which the video signal and audio signal are converted into digital signals and, when necessary, further compressed along the time base, and then sequentially recorded, by means of rotary heads making helical scanning on a magnetic tape, along recording tracks at an angle with the longitudinal direction of the tape as digital video data and digital audio data, or the original signals are reproduced from the recording tracks, has been proposed.

In such a D-VTR, the sampling frequency of the audio signal is set for example to 48 kHz by standards in connection with other audio equipment and therefore one field period of the video signal in the NTSC system becomes 60/1.001 (= 59.94) Hz. Hence, the number of samples in one field period becomes 48 kHz/59.94 Hz = 800.8 and does not become an integer.

Therefore, it is practiced such that the number of samples of the audio data recorded in one field period is set to 801 samples for the fields from the 1st to 4th fields and 800 samples for the 5th field, and thereafter, also 4004 samples are recorded during every 5-field period with such a period treated as a cyclic set of periods.

In order to reproduce such an audio signal recorded as described above, it is required to identify the number of samples of the audio data included in each field. Therefore, there is proposed a way to record identification flags together with digital audio data for identifying each field as that having 800 samples of digital audio data within one field period of a video signal and as that having 801 samples of digital audio data within the same period. Thereby, at the time of reproduction, the identification flag is referred to and the number of output samples of the digital audio data is controlled. However, there has been a problem with a reproducing circuit system in a D-VTR with the described arrangement that, if an error occurs in such an identification flag for identifying the number of samples within one field period at the time of reproduction, the control of the number of output samples of the digital audio data becomes impossible.

Such prior art is, for example, disclosed in EP-A-0 239 326.

### OBJECTS AND SUMMARY OF THE INVENTION

An object of the present invention is to propose a new digital audio signal recording/reproducing system in which the above mentioned problem is solved.

Another object of the present invention is to propose a digital audio signal recording/reproducing system capable of recording sampled digital audio data together with a video signal on a recording medium and, at the time of reproduction, identifying the number of samples of digital audio data within each field, thereby controlling the number of the output samples.

A further object of the present invention is to propose a digital audio signal reproducing system in which the number of the output samples of digital audio data can be controlled without using a sample number identification flag.

A PCM audio signal is provided by digitizing an audio signal according to a sampling frequency in a specific relationship with the unit period of a video signal, dividing the digitized signal into specific plural blocks and encoding each block for error correction, and attaching identification information for identifying the specific block and a synchronization signal to each block and it is recorded on a recording medium. In a digital audio signal reproducing system for reading such a PCM audio signal on a recording medium, decoding the PCM audio signal by means of a decoder for the error correction, and reconstructing the decoded signal by means of a memory means, thereby reproducing the original digital audio signal, the present invention to achieve the above mentioned objects is adapted such that, when the identification signal reproduced is correct, numbering data corresponding to each block of the plural blocks synchronized, at a predetermined period, with the field period of the video signal and the sampling frequency of the audio signal are delivered based on the identification signal to a counting circuit as preset data, and when an error is detected in the reproduced identification signal, the preset data is inhibited from being loaded into the counting circuit but a clock having a period corresponding to the block of the digital audio signal is counted up to a maximum of the number of the plural blocks, whereby the phase of each block of the plural blocks synchronized with the sampling frequency can be correctly detected based on the count output obtained from the counting circuit at all times, and thus the number of the samples of the original digital audio signal taken out at the time when the same is read out of the memory means can be controlled to be in accordance with the number of samples in each block of the plural blocks.

### BRIEF DESCRIPTION OF THE DRAWINGS

FIG. 1 shows an example of arrangement of recording and playback heads in a digital VTR to which this invention is applied;
FIG. 2 shows a track pattern recorded by the heads shown in FIG. 1;
FIG. 3 is a table for explanation of a double recording technique of digital audio data;
FIG. 4 shows a data pattern of a block of the digital audio data;
FIG. 5 shows a block diagram of a digital audio data reproducing system according to the invention;
FIG. 6 shows an example of a circuit controlling the number of output samples of the digital audio data; and
FIG. 7 is a table for explanation of the operation of a numbering data generator according to the invention.

### DETAILED DESCRIPTION OF THE PREFERRED EMBODIMENTS

Before explaining this invention, a digital VTR (D-VTR) for recording a digital audio signal together with a video signal to which the invention is applied will be described referring to the drawings.

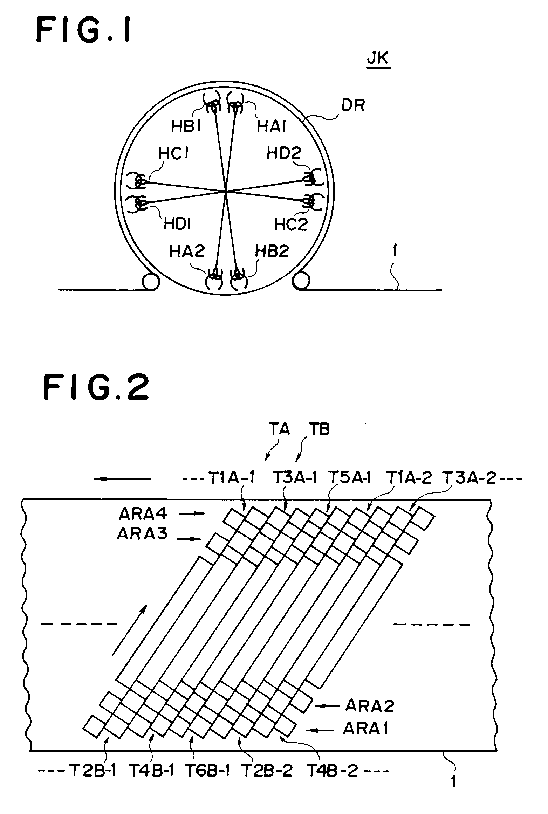

In such a D-VTR, it is arranged such that the digital video data and digital audio data are recorded and reproduced on a magnetic tape 1 using a rotary magnetic head JK, as shown in FIG. 1, formed of a rotary drum DR having two pair of recording heads HA1, HB1 and HA2, HB2, and two pair of playback heads HC1, HD1 and HC2, HD2, crossing the above recording heads at right angles, disposed thereon.

The pair of recording heads HA1, HB1 (HA2, HB2) and playback heads HC1, HD1 (HC2, HD2) are respectively spaced one track width apart in the direction of their height, and the tape traveling speed and the rotary drum rotating speed are set such that, for example in the NTSC system, the digital video data for one field is recorded and reproduced while the rotating drum DR makes one and half rotations.

Thus, with a pair of recording tracks of positive and negative azimuth angles (hereinafter, the recording track with a positive azimuth angle will be called "recording track A" and that with a negative azimuth angle, "recording track B") TA, TB formed by the pair of recording heads HA1, HB1 (HA2, HB2) taken as a unit (hereinafter to be called "segment"), the digital video data for one field is recorded on the magnetic tape 1 using three segments, or six tracks T1A, T2B, T3A, T4B, T5A, and T6B, as shown in FIG. 2.

In addition to the above, in the areas at the end of each of recording tracks TA, TB where the recording heads HA1, HB1 (HA2, HB2) and the playback heads HC1, HD1 (HC2, HD2) starts to abut on the magnetic tape 1 for the scanning and at the end thereof where they are to leave it, there are provided audio areas ARA1, ARA2, and ARA3, ARA4 for recording the digital audio data therein are provided, respectively.

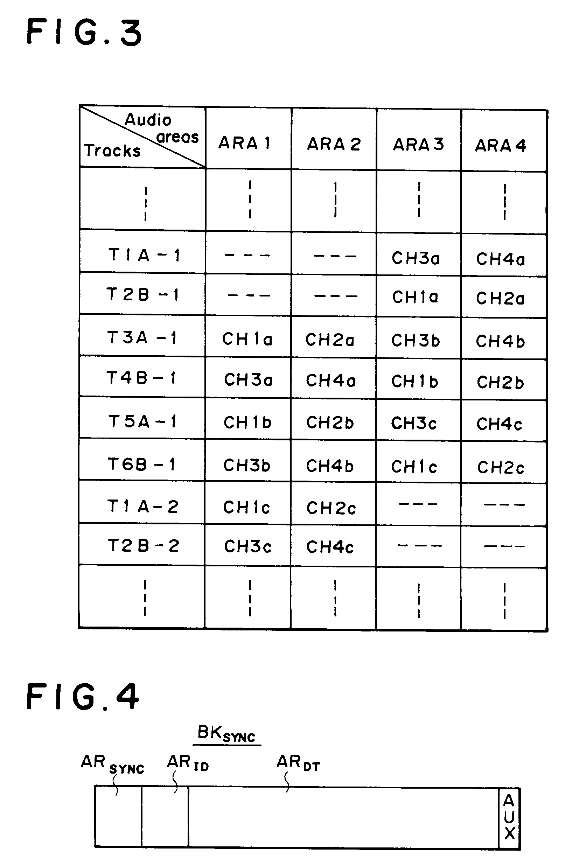

Four channels of digital audio data for one field period are each compressed along the time base and divided into three divisions, and these divisions are recorded twice at different locations in the audio areas ARA1 to ARA4 as shown in FIG. 3. More particularly, digital audio data CH1a, CH1b, CH1c and CH2a, CH2b, CH2c for the first and second channels, respectively, are recorded both in the audio areas ARA1 and ARA2 of the recording tracks A T3A-1, T5A-1, T1A-2 and in the audio areas ARA3 and ARA4 of the tracks which are preceding the above tracks by one track, i.e., the recording tracks B T2B-1, T-4B1, T-6B1.

Likewise, digital audio data CH3a, CH3b, CH3c and CH4a, CH4b, CH4c for the third and fourth channels, respectively, are recorded twice, i.e., both in the audio areas ARA1 and ARA2 of the recording tracks B T4B-1, T6B-1, T2B-2 and in the audio areas ARA3 and ARA4 of the tracks preceding the above tracks by three tracks, i.e., the recording tracks A T1A-1, T3A-1, T5A-1.

By such arrangement for recording twice, i.e., to record each data both in the record areas ARA1, ARA2 and in the record areas ARA3 and ARA4 at the scan starting end and the scan finishing end on the magnetic tape 1, even when a scratch or the like is formed at a part of the magnetic tape 1 whereby it becomes difficult to reproduce digital audio data from that part, it is made possible to compensate for such data by the use of the data on the side free from a flaw, and thus, the reliability on the audio signal in the practical use can be greatly enhanced.

As described above, the sampling frequency of the audio signal is set for example to 48 kHz by standards in connection with other audio equipment and therefore one field period thereof in the NTSC system becomes 60/1.001 (= 59.94) Hz, and hence, the number of samples in one field period becomes 48 kHz/59.94 Hz = 800.8 and does not become an integer.

Therefore, it is practiced such that the number of samples of the audio data recorded in one field period is set to 801 samples for the fields from the 1st to 4th fields and 800 samples for the 5th field (that is, 267 samples are allocated to the 1st to 14th segments and 266 samples are allocated to the 15th segment), and thereafter, also 4004 samples are recorded during every 5-field period (i.e., 15-segment period), with such a period treated as a cyclic set of periods.

In each of the audio areas ARA1, ARA2, ARA3, and ARA4, there are included six sync block BK_{SYNC}, each thereof consisting of a sync area AR_{SYNC}, an ID area AR_{ID}, and a data area AR_{DT} as shown in FIG. 4. The six data areas AR_{DT} each include digital audio data for one segment for one channel.

In the ID area AR_{ID} of each sync block BK_{SYNC}, there are recorded a field ID F_{ID} of value "0" - "4" representative of five kinds of field numbers within one cyclic set of periods recording 4004 samples of digital audio data and a segment ID S_{ID} of value "0" - "2" representative of three kinds of segment numbers in each field. Further, in an AUX DATA portion within the data area AR_{DT} is recorded a sample number identification flag indicating, when its value is "0", that 267 samples of digital audio data are recorded in the segment and, when conversely its value is "1", that 266 samples of digital audio data are recorded in the segment.

Thus, the reproducing circuit system in a D-VTR refers to the sample number identification flag recorded in the ID area AR_{ID} in each sync block BK_{SYNC}, and when the sample number identification flag is of value "0", it outputs 267 samples of the digital audio data for the segment, and when conversely the sample number identification flag is of value "1", it outputs 266 samples of digital audio data for the segment, and thereby, the number of output samples of the digital audio data is controlled.

With the reproducing circuit system of a D-VTR of the described arrangement, since the number of the output samples of the digital audio data is controlled by simple reference to the sample number identification flag recorded in the ID area AR_{ID} of each sync block BK_{SYNC}, there has been a problem that the number of the output samples of the digital audio data becomes uncontrollable when an error occurs in the sample number identification flag at the time of reproduction.

Now, an embodiment of the present invention will be described in detail with reference to the accompanying drawings.

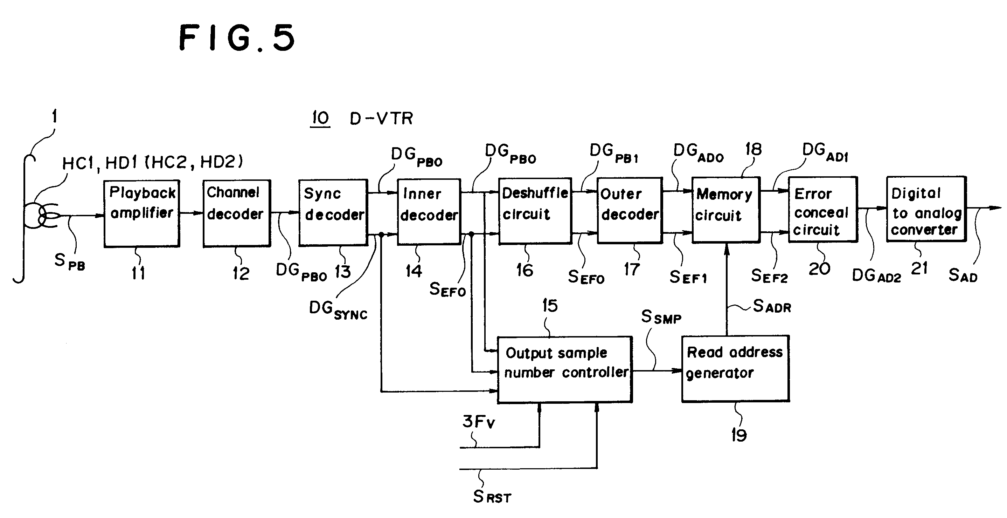

Referring to FIG. 5, reference numeral 10 denotes the whole of the reproducing circuit system of digital audio data within a digital video tape recorder (D-VTR), in which a reproduced RF signal S_{PB} read out from a magnetic tape 1 by playback heads HC1, HD1 (HC2, HD2) is input through a playback amplifier 11 to a channel decoder 12 to be demodulated and, then, it is delivered as a reproduced digital data DG_{PB0} to a sync decoder 13.

In the sync decoder 13, the sync area AR_{SYNC} of each sync block BK_{SYNC} (FIG. 4) of the reproduced digital data DG_{PB0} is decoded and reproduced sync data DG_{SYNC} is thereby obtained, and the reproduced sync data DG_{SYNC} is supplied to an inner decoder 14, together with the reproduced digital data DG_{PB0}, and it is also delivered to an output sample number controller 15.

In the inner decoder 14, the ID area AR_{ID} of each sync block BK_{SYNC} of the reproduced digital data DG_{PB0} is decoded and a reproduced error flag S_{EF0} is formed from error information detected at the time of the decoding, and this reproduced error flag S_{EF0} together with the reproduced digital data DG_{PB0} are supplied to a deshuffle circuit 16 in the next stage as well as to the output sample number controller 15.

In the deshuffle circuit 16, the reproduced digital data DG_{PB0} is deshuffled and then input as reproduced digital data DG_{PB1} to an outer decoder 17 together with the reproduced error flag S_{EF0}, wherein data area AR_{DT} of each sync block BK_{SYNC} is decoded and thereby a digital audio data DG_{AD0} is obtained, and also error information obtained at the time of the decoding is added to the reproduced error flag S_{EF0} and thereby a reproduced error flag S_{EF1} is formed, and this reproduced error flag S_{EF1} together with the digital audio data DG_{AD0} are temporarily written into a memory circuit 18 formed of a RAM (random access memory).

The digital audio data DG_{AD0} and the reproduced error flag S_{EF1} written in the memory circuit 18 are read out as digital audio data DG_{AD1} and a reproduced error flag S_{EF2}, based on an address control signal S_{ADR} obtained from a read address generator 19 generating a read address to access the RAM responding to a sample number control signal S_{SMP} delivered from the output sample number controller 15, and these are supplied to a succeeding error conceal circuit 20.

In the error conceal circuit 20, errors in the digital audio data DG_{AD1} are corrected based on the reproduced error flag S_{EF2} and thereby digital audio data DG_{AD2} is obtained, and this digital audio data DG_{AD2} is converted from digital form into analog form in a following digital-to-analog converter 21, and the thus reproduced audio signal S_{AD} is delivered to an audio signal processing circuit system (not shown). In the described way, digital audio data recorded on the magnetic tape 1 together with digital video data is reproduced to obtain the reproduced audio signal S_{AD}.

In the present embodiment, different from the prior art system in which the sample number identification flag recorded in the AUX DATA portion within the data area AR_{DT} of each sync block BK_{SYNC} is referred to and thereby the number of the samples of the digital audio data is controlled, the output sample number control signal S_{SMP} is formed in the output sample number controller 15 based on the field ID F_{ID} and segment ID S_{ID} included in the ID area AR_{ID} of each sync block BK_{SYNC} and the read address generator 19 generates the address control signal S_{ADR} according to the sample number control signal S_{SMP}, and thereby the number of samples of the digital audio data is controlled.

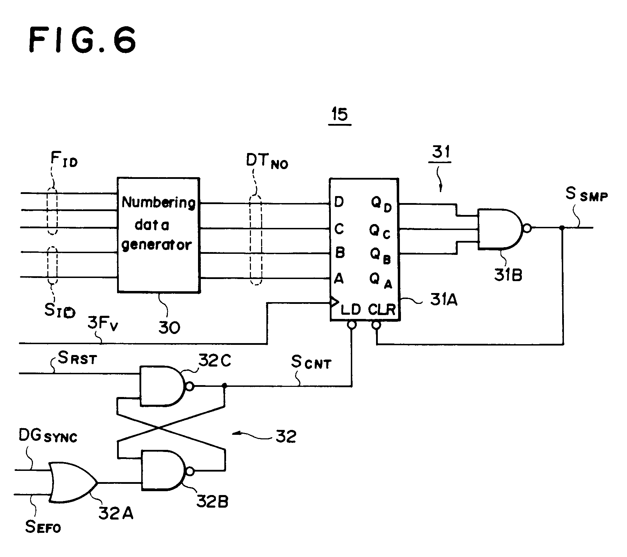

The output sample number controller 15, as shown in FIG. 6, is of a ROM (read only memory) structure and made up of a numbering data generator 30 for generating data for cyclically numbering the segments on the magnetic tape 1 from "0" to "14" based on the field ID F_{ID} and the segment ID S_{ID} decoded in the inner decoder 14, a counting circuit 31 of a four-bit counter structure for receiving numbering data DT_{NO} from the numbering data generator 30 at its preset inputs A, B, C, and D and outputting the output sample number control signal S_{SMP}, which has logical "L" level when the count value becomes "14", and a counter controller 32 for controlling the presetting of the numbering data DT_{NO} in the counting circuit 31 based on the reproduced sync data DG_{SYNC} obtained from the sync decoder 13 and the reproduced error flag S_{EF0} obtained from the inner decoder 14.

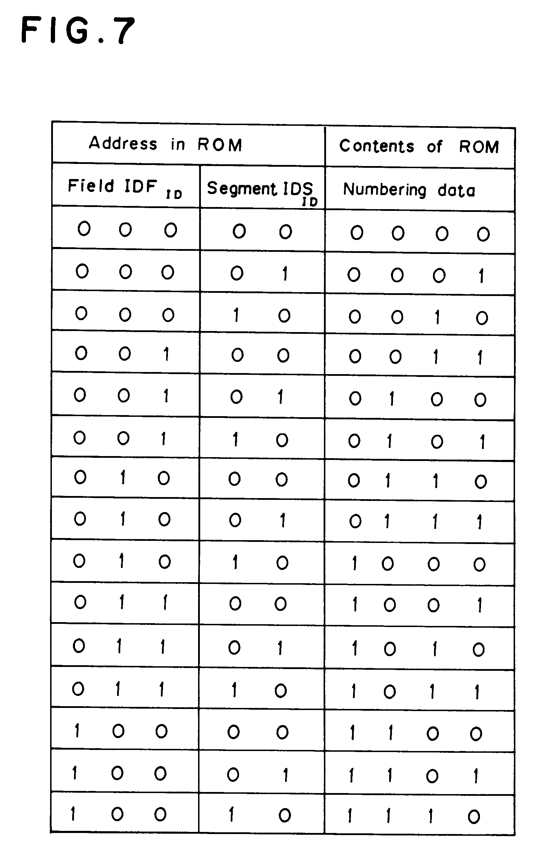

To the numbering data generator 30 is input a combination of the field ID F_{ID} and the segment ID S_{ID} decoded in the inner decoder 14 as a read address to access the ROM, and thereby, the contents previously written in the ROM at the address corresponding to the field ID F_{ID} and segment ID S_{ID} as shown in FIG. 7 are read out as numbering data DT_{NO} and delivered to the counting circuit 31.

The clock terminal of the counter 31A of the counting circuit 31 is supplied with a reference clock 3Fv which goes high three times in one field period of the video data.

Three high-order bits Q_{B}, Q_{C}, Q_{D} of four-bit outputs Q_{A}, Q_{B}, Q_{C}, Q_{D} are delivered to a NAND gate circuit 31B, whereby the output sample number control signal S_{SMP} whose logical level is "L" when the count value of the counter 31A is "14" or above is output from the NAND gate circuit 31B. Further, the output sample number control signal S_{SMP} is input being inverted to the clear input CLR of the counter 31A, whereby the inner count value is initialized to "0", and thus, the counting circuit 31 as a whole constitutes a divide-by-15 counter.

The counter controller 32 is formed in combination of an OR gate circuit 32A, a first and a second NAND gates 32B and 32C, in which the reproduced sync data DG_{SYNC} obtained from the sync decoder 13 and the reproduced error flag S_{EF0} obtained from the inner decoder 14 are input to the OR gate 32A.

The logical output of the OR gate circuit 32A together with the logical output of the second AND gate circuit 32C are input to the first NAND gate circuit 32B and the logical output therefrom together with a reset signal S_{RST}, which goes from logical "H" level to logical "L" level delayed by a predetermined length of time at the timing of the rise of the reference clock 3Fv, are input to the second NAND gate circuit 32C. The logical output of it, as a counter control signal S_{CNT}, is input being inverted to the load terminal LD of the counter 31A.

Thereby, the counter controller 32, when the reproduced sync data DG_{SYNC} is obtained normally and the field ID F_{ID} and the segment ID S_{ID} are free from errors upon reference to the reproduced error flag S_{EF0}, supplies the counter 31A with the counter control signal S_{CNT} to control the counter 31A to become loadable. However, when the reproduced sync data DG_{SYNC} is not obtained normally or the field ID F_{ID} or the segment ID S_{ID} contains an error even if the reproduced sync data DG_{SYNC} is obtained normally, the counter control signal S_{CNT} to put the counter 31A into a load inhibited state is output.

Thus, the counting circuit 31 in its turn, when the reproduced sync data DG_{SYNC} is obtained normally and the field ID F_{ID} and the segment ID S_{ID} are free from errors, presets the numbering data DT_{NO} incoming from the numbering data generator 30 sequentially at the timing of the rise of the reference clock 3Fv, as its inner count value, and then outputs it. However, when the reproduced sync data DG_{SYNC} is not obtained normally or the field ID F_{ID} or the segment ID S_{ID} contains an error even if the reproduced sync data DG_{SYNC} is obtained normally, it performs sequential upward counting at the timing of the rise of the reference clock 3Fv and outputs this count value.

In the described manner, once the reproduced sync data DG_{SYNC} is normally obtained and, additionally, the field ID F_{ID} and the segment ID S_{ID} are found free from errors, the output sample number controller 15, even if such a thing then occurs that the reproduced sync data DG_{SYNC} is not normally obtained or an error is detected in the field ID F_{ID} and the segment ID S_{ID}, reads out the output sample number control signal S_{SMP} which corresponds to each segment on the magnetic tape 1 and goes to "L" level when it corresponds to the 15th segment based on the field ID F_{ID} and the segment ID S_{ID} and delivers the signal to the address generator 19..

Thus, the address generator 19, when the output sample number control signal S_{SMP} is at "H" level, outputs the address control signal S_{ADR} to read 267 samples to the memory circuit 18, and, when conversely the output sample number control signal S_{SMP} is at "L" level, it outputs the address control signal S_{ADR} to read 266 samples to the memory circuit 18. Thereby, the output sample number of the digital audio data can be controlled to be correct at all times.

With the described arrangement, in reproducing digital audio data on the magnetic tape, phases of the 15 segments on the magnetic tape are detected by the use of the field ID and the segment ID, and the phases of the 15 segments are loaded into the divide-by-15 counter only when the field ID and segment ID are correctly reproduced, whereas the divide-by-15 counter is allowed to count upward, when the field ID and the segment ID contain an error, by the use of the reference clock corresponding to the segment on the magnetic tape, and thus, it is made possible to detect the segment in which digital audio data of the different sample number is recorded even when the field ID and the segment ID contain an error and it is thereby achieved to easily embody a D-VTR capable of controlling the number of output samples to be correct at all times.

According to the present invention as described above, a digital audio signal reproducing system, in a digital audio signal reproducing system for reading on a recording medium such a PCM audio signal as provided by digitizing an audio signal according to a sampling frequency in a specific relationship with the unit period of a video signal, dividing the digitized signal into specific plural blocks and encoding each block for error correction, and attaching identification information for identifying the specific block and a synchronization signal to each block, and recorded on the recording medium, decoding the PCM audio signal by means of a decoder for the error correction, and reconstructing the decoded signal by means of a memory means, thereby reproducing the original digital audio signal, adapted such that, when the identification signal reproduced is correct, numbering data corresponding to each block of the plural blocks synchronized with the unit period of the video signal and the sampling frequency are delivered based on the identification signal to a counting circuit as preset data, and when an error is detected in the reproduced identification signal, the preset data is inhibited from being loaded into the counting circuit but a clock having a period corresponding to the unit period of the video signal is counted up to a maximum of the number of the plural blocks, whereby the phase of each block of the plural blocks synchronized with the sampling frequency can be correctly detected based on the count output obtained from the counting circuit at all times, and thus the number of the samples of the original digital audio signal taken out at the time when the same is read out of the memory means can be controlled to be in accordance with the number of samples of each block of the plural blocks can be easily embodied.

Although the embodiment was described above as to the case where the present invention was applied to a D-VTR having the format in which digital audio data for one field is divided into three segments and recorded along six tracks, the present invention is not limited to such a case. It can be applied, for example, to a D-VTR having a format in which digital audio data for one field is divided into two segments and recorded along four tracks or other D-VTRs having other formats.

Incidentally, when the present invention is applied to a D-VTR having the format in which digital audio data for one field is divided into two segments, the same effect as obtained in the above described embodiment can be obtained by forming the counting circuit of the output sample number controller of a divide-by-10 counter, or decade counter, instead of the divide-by-15 counter, and by arranging such that an output sample number control signal having a different logical level is output at the phase corresponding to the segment with the different sample number.

Although, in the above described embodiment, the present invention was applied to the D-VTR having the format to perform double recording of the digital audio data on the magnetic tape, the present invention is not limited to such a format but it can be applied to a D-VTR having a format to record the digital audio data only once.

Further, although the above embodiment was described as to the case where the present invention was applied to a digital video tape recorder (D-VTR), the present invention is not limited to that but it is suitable for use in a variety of digital audio signal processing systems reproducing data from other recording media such as an optical disk with digital video data and digital audio data recorded thereon.

## Claims

1. A system for reproducing digital audio data from a recording medium on which segments of said digital audio data are recorded with video data, wherein L segments of said digital audio data correspond to one field of said video data, L, being an integer with L ≧ 1, each of said segments including plural samples of said digital audio data, the number of said samples in each said field of M fields out of N fields being different from that of remaining N - M fields, M and N being integers with N > M, and each of said segments further including identification data indicating field numbers 1 through N to which each said segment belongs, said system comprising:
means for detecting said identification data in each segment of said digital audio data;
means for detecting an error in said identification data;
means for deriving numbering data 1 through LN from said identification data, said numbering data indicating the phase of each said segment in a set of said N fields;
counter means into which said numbering data derived from said identification data is loaded when no error is detected in said identification data and which counts a clock signal when an error is detected in said identification data, said clock signal having a period corresponding to one said segment; and
means for reconstructing said digital audio data according to the output of said counter means.

2. A system for reproducing digital audio data according to claim 1, wherein each segment of said digital audio data is recorded twice at different portions of said recording medium.

3. A system for reproducing digital audio data according to claim 1, wherein one field of said video data corresponds to at least two segments of said digital audio data, said system further comprising:
adding means for adding second identification data to each segment, said second identification data indicating segment numbers within one said field.

4. A system for reproducing digital audio data according to claim 1, wherein the number of said samples in one field out of said N fields is different from that of each of remaining N - 1 fields.

5. A system for reproducing digital audio data according to claim 4, wherein one field of said video data corresponds to at least two segments of said digital audio data and only one segment out of all segments within said N fields has different number of said samples of said digital audio data.

6. A system for reproducing digital audio data according to claim 1, wherein said counter means is a divide-by-LN counter.

7. A system for recording and reproducing digital audio data and video data on a recording medium, comprising:
dividing means for dividing said digital audio data into segments each thereof having plural samples of said digital audio data;
adding means for adding identification data to each of said segments;
recording means for recording said segments of said digital audio data together with said video data so that one field of said video data corresponds to L segments of said digital audio data, L being an integer with L ≧ 1, the number of said samples in each said field of M fields out of N fields being different from that of remaining N - M fields, M and N being integers with N > M, and said identification data indicating field numbers 1 through N to which each segment belongs;
means for reproducing said digital audio data from said recording medium;
means for detecting said identification data in each segment of said digital audio data;
means for detecting an error in said identification data;
means for deriving numbering data 1 through LN from said identification data, said numbering data indicating the phase of each said segment in a set of said N fields;
counter means into which said numbering data derived from said identification data is loaded when no error is detected in said identification data and which counts a clock signal when an error is detected in said identification data, said clock signal having a period corresponding to one said segment; and
means for reconstructing said digital audio data according to the output of said counter means.

8. A system for recording and reproducing digital audio data according to claim 7, wherein each segment of said digital audio data is recorded twice at different portions of said recording medium.

9. A system for recording and reproducing digital audio data according to claim 7, wherein one field of said video data corresponds to at least two segments of said digital audio data, said system further comprising:
second adding means for adding second identification data to each segment, said second identification data indicating segment numbers within one said field.

10. A system for recording and reproducing digital audio data according to claim 7, wherein the number of said samples in one field out of said N fields is different from that of each of remaining N - 1 fields.

11. A system for recording and reproducing digital audio data according to claim 10, wherein one field of said video data corresponds to at least two segments of said digital audio data and only one segment out of all segments within said N fields has different number of said samples of said digital audio data.

12. A system for recording and reproducing digital audio data according to claim 7, wherein said counter means is a divide-by-LN counter.

## Patentansprüche

1. System zum Wiedergeben digitaler Audiodaten von einem Aufzeichnungsmedium, auf dem Segmente der digitalen Audiodaten zusammen mit Videodaten aufgezeichnet sind, wobei L Segmente der digitalen Audiodaten einem Halbbild der Videodaten entsprechen, wobei L eine ganze Zahl ist, mit L ≧ 1, wobei jedes der Segmente mehrere Abtastwerte der digitalen Audiodaten enthält, wobei die Anzahl der Abtastwerte in jedem Halbbild von M Halbbildern unter N Halbbildern verschieden von der in den restlichen N - M Halbbildern ist, wobei M und N ganze Zahlen sind, mit N > M, und wobei die Segmente ferner Kennungsdaten beinhalten, die Halbbildnummern 1 bis N kennzeichnen, zu denen jeweils ein solches Segment gehört, mit:
- einer Einrichtung zum Erkennen der Kennungsdaten in jedem Segment der digitalen Audiodaten;
- einer Einrichtung zum Erkennen eines Fehlers in den Kennungsdaten;
- einer Einrichtung zum Herleiten von Numerierungsdaten 1 bis LN aus den Kennungsdaten, wobei die Numerierungsdaten die Phase jedes Segments in einem Satz von N Halbbildern kennzeichnen;
- einer Zählereinrichtung, in die der aus einem Kennungsdatenwert erzeugte Numerierdatenwert dann geladen wird, wenn kein Fehler im Kennungsdatenwert erkannt wird, und der ein Taktsignal zählt, wenn ein Fehler im Kennungsdatenwert erkannt wird, wobei das Taktsignal eine einem Segment entsprechende Periode aufweist; und
- einer Einrichtung zum Rekonstruieren der digitalen Audiodaten abhängig vom Ausgangssignal der Zählereinrichtung.

2. System zum Wiedergeben digitaler Audiodaten nach Anspruch 1, bei dem jedes Segment der digitalen Audiodaten in verschiedenen Teilen des Aufzeichnungsmediums doppelt aufgezeichnet wird.

3. System zum Wiedergeben digitaler Audiodaten nach Anspruch 1, bei dem ein Halbbild der Videodaten mindestens zwei Segmenten der digitalen Audiodaten entspricht, und das ferner folgendes aufweist:
- eine Addiereinrichtung zum Hinzufügen eines zweiten Kennungsdatenwerts zu jedem Segment, wobei der zweite Kennungsdatenwert die Segmentnummern innerhalb eines Halbbilds kennzeichnet.

4. System zum Wiedergeben digitaler Audiodaten nach Anspruch 1, bei dem sich die Anzahl der Abtastwerte in einem Halbbild unter den N Halbbildern von denjenigen in den restlichen N - 1 Halbbildern unterscheidet.

5. System zum Wiedergeben digitaler Audiodaten nach Anspruch 4, bei dem ein Halbbild der Videodaten mindestens zwei Segmenten der digitalen Audiodaten entspricht und nur ein Segment unter allen Segmenten innerhalb der N Halbbilder eine andere Anzahl von Abtastwerten der digitalen Audiodaten hat.

6. System zum Wiedergeben digitaler Audiodaten nach Anspruch 1, bei dem die Zählereinrichtung ein durch LN teilender Zähler ist.

7. System zum Aufzeichnen und Wiedergeben digitaler Audiodaten und Videodaten auf einem Aufzeichnungsmedium, mit:
- einer Unterteilungseinrichtung zum Unterteilen der digitalen Audiodaten in Segmente, von denen jedes mehrere Abtastwerte der digitalen Audiodaten enthält;
- einer Hinzufügeeinrichtung zum Hinzufügen eines Kennungsdatenwerts zu jedem der Segmente;
- einer Aufzeichnungseinrichtung zum Aufzeichnen der Segmente der digitalen Audiodaten zusammen mit den Videodaten in solcher Weise, daß ein Halbbild der Videodaten L Segmenten der digitalen Audiodaten entspricht, wobei L eine ganze Zahl ist, mit L ≧ 1, wobei die Anzahl der Abtastwerte in jedem Halbbild von M Halbbildern unter N Halbbildern von derjenigen in den restlichen N - M Halbbildern verschieden ist, wobei N und M ganze Zahlen sind, mit N > M, und wobei die Kennungsdaten Halbbildnummern 1 bis N angeben, zu denen jedes Segment gehört;
- einer Einrichtung zum Wiedergeben der digitalen Audiodaten vom Aufzeichnungsmedium;
- einer Einrichtung zum Erkennen der Kennungsdaten in jedem Segment der digitalen Audiodaten;
- einer Einrichtung zum Erkennen eines Fehlers in den Kennungsdaten;
- einer Einrichtung zum Herleiten von Numerierungsdaten 1 bis LN aus den Kennungsdaten, wobei die Numerierungsdaten die Phase jedes Segments in einem Satz von N Halbbildern kennzeichnen;
- einer Zählereinrichtung, in die der aus einem Kennungsdatenwert erzeugte Numerierdatenwert dann geladen wird, wenn kein Fehler im Kennungsdatenwert erkannt wird, und der ein Taktsignal zählt, wenn ein Fehler im Kennungsdatenwert erkannt wird, wobei das Taktsignal eine einem Segment entsprechende Periode aufweist; und
- einer Einrichtung zum Rekonstruieren der digitalen Audiodaten abhängig vom Ausgangssignal der Zählereinrichtung.

8. System zum Aufzeichnen und Wiedergeben digitaler Audiodaten nach Anspruch 7, bei dem jedes Segment der digitalen Audiodaten doppelt in verschiedenen Bereichen des Aufzeichnungsmediums aufgezeichnet wird.

9. System zum Aufzeichnen und Wiedergeben digitaler Audiodaten nach Anspruch 7, bei dem ein Halbbild der Videodaten mindestens zwei Segmenten der digitalen Audiodaten entspricht, wobei das System ferner folgendes aufweist:
- eine zweite Hinzufügeeinrichtung zum Hinzufügen eines zweiten Kennungsdatenwerts zu jedem Segment, der Segmentnummern innerhalb des einen Halbbilds kennzeichnet.

10. System zum Aufzeichnen und Wiedergeben digitaler Audiodaten nach Anspruch 7, bei dem die Anzahl der Abtastwerte in einem Halbbild unter den N Halbbildern von der in den restlichen N - 1 Halbbildern verschieden ist.

11. System zum Aufzeichnen und Wiedergeben digitaler Audiodaten nach Anspruch 10, bei dem ein Halbbild der Videodaten mindestens zwei Segmenten der digitalen Audiodaten entspricht und nur ein Segment unter allen Segmenten innerhalb der N Halbbilder eine andere Anzahl von Abtastwerten der digitalen Audiodaten aufweist.

12. System zum Aufzeichnen und Wiedergeben digitaler Audiodaten nach Anspruch 7, bei dem die Zählereinrichtung ein durch LN teilender Zähler ist.

## Revendications

1. Système pour reproduire des données audio numériques à partir d'un support d'enregistrement sur lequel des segments desdites données audio numériques sont enregistrés avec des données vidéo, dans lequel L segments desdites données audio numériques correspondent à une trame desdites données vidéo, L étant un entier qui satisfait L ≧ 1, chacun desdits segments incluant plusieurs échantillons desdites données audio numériques, le nombre desdits échantillons dans chaque dite trame de M trames prises parmi N trames étant différent de celui dans les N - M trames restantes, M et N étant des entiers qui satisfont N > M, et chacun desdits segments incluant en outre des données d'identification indiquant des numéros 1 à N des trames auxquelles chaque dit segment appartient, ledit système comprenant :
un moyen pour détecter lesdites données d'identification de chaque segment parmi lesdites données audio numériques ;
un moyen pour détecter une erreur dans lesdites données d'identification ;
un moyen pour dériver des données de numérotation 1 à LN à partir desdites données d'identification, lesdites données de numérotation indiquant la phase de chaque dit segment dans un jeu desdites N trames ;
un moyen de compteur dans lequel lesdites données de numérotation dérivées à partir desdites données d'identification sont chargées lorsqu'aucune erreur n'est détectée dans lesdites données d'identification et qui compte un signal d'horloge lorsqu'une erreur est détectée dans lesdites données d'identification, ledit signal d'horloge présentant une période qui correspond à un dit segment ; et
un moyen pour reconstruire lesdites données audio numériques conformément à la sortie dudit moyen de compteur.

2. Système pour reproduire des données audio numériques selon la revendication 1, dans lequel chaque segment desdites données audio numériques est enregistré deux fois au niveau de parties différentes dudit support d'enregistrement.

3. Système pour reproduire des données audio numériques selon la revendication 1, dans lequel une trame desdites données vidéo correspond à au moins deux segments desdites données audio numériques, ledit système comprenant en outre :
un moyen d'addition pour additionner des secondes données d'identification à chaque segment, lesdites secondes données d'identification indiquant des numéros de segments dans une dite trame.

4. Système pour reproduire des données audio numériques selon la revendication 1, dans lequel le nombre desdits échantillons dans une trame prise parmi lesdites N trames est différent de celui de chacune des N - 1 trames restantes.

5. Système pour reproduire des données audio numériques selon la revendication 4, dans lequel une trame desdites données vidéo correspond à au moins deux segments desdites données audio numériques et seulement un segment pris parmi tous les segments contenus dans lesdites N trames comporte un nombre différent desdits échantillons desdites données audio numériques.

6. Système pour reproduire des données audio numériques selon la revendication 1, dans lequel ledit moyen de compteur est un compteur à division par LN.

7. Système pour reproduire des données audio numériques et des données vidéo sur un support d'enregistrement, comprenant :
un moyen de division pour diviser lesdites données audio numériques en segments dont chacun comporte plusieurs échantillons desdites données audio numériques ;
un moyen d'addition pour additionner des données d'identification à chacun desdits segments ;
un moyen d'enregistrement pour enregistrer lesdits segments desdites données audio numériques ensemble avec lesdites données vidéo de telle sorte qu'une trame desdites données vidéo corresponde à L segments desdites données audio numériques, L étant un entier qui satisfait L ≧ 1, le nombre desdits échantillons dans chaque dite trame de M trames prises parmi N trames étant différent de celui dans les N - M trames restantes, M et N étant des entiers qui satisfont N > M, et lesdites données d'identification indiquant des numéros 1 à N des trames auxquelles chaque segment appartient ;
un moyen pour reproduire lesdites données audio numériques à partir dudit support d'enregistrement :
un moyen pour détecter lesdites données d'identification dans chaque segment desdites données audio numériques ;
un moyen pour détecter une erreur dans lesdites données d'identification ;
un moyen pour dériver des données de numérotation 1 à LN à partir desdites données d'identification, lesdites données de numérotation indiquant la phase de chaque dit segment dans un jeu desdites N trames ;
un moyen de compteur dans lequel lesdites données de numérotation dérivées à partir desdites données d'identification sont chargées lorsqu'aucune erreur n'est détectée dans lesdites données d'identification et qui compte un signal d'horloge lorsqu'une erreur est détectée dans lesdites données d'identification, ledit signal d'horloge présentant une période qui correspond à un dit segment ; et
un moyen pour reconstruire lesdites données audio numériques conformément à la sortie dudit moyen de compteur.

8. Système pour enregistrer et reproduire des données audio numériques selon la revendication 7, dans lequel chaque segment desdites données audio numériques est enregistré deux fois au niveau de parties différentes dudit support d'enregistrement.

9. Système pour enregistrer et reproduire des données audio numériques selon la revendication 7, dans lequel une trame desdites données vidéo correspond à au moins deux segments desdites données audio numériques, ledit système comprenant en outre :
un second moyen d'addition pour additionner des secondes données d'identification à chaque segment, lesdites secondes données d'identification indiquant des numéros de segments dans une dite trame.

10. Système pour enregistrer et reproduire des données audio numériques selon la revendication 7, dans lequel le nombre desdits échantillons dans une trame prise parmi lesdites N trames est différent de celui de chacune des N - 1 trames restantes.

11. Système pour enregistrer et reproduire des données audio numériques selon la revendication 10, dans lequel une trame desdites données vidéo correspond à au moins deux segments desdites données audio numériques et seulement à un segment pris parmi tous les segments dans lesdites N trames comporte un nombre différent desdits échantillons desdites données audio numériques.

12. Système pour enregistrer et reproduire des données audio numériques selon la revendication 7, dans lequel ledit moyen de compteur est un compteur à division par LN.
